# FASCICULE DE BREVET EUROPEEN

(11) **EP 0 403 623 B1**
(45) Date de publication et mention de la délivrance du brevet: **04.08.1993**
(21) Numéro de dépôt: 90900218.0
(22) Date de dépôt: 15.12.1989
(51) Int. Cl.: A22B 5/00, A22B 5/14, A22B 5/20

(54) **DISPOSITIF D'EVISCERATION AUTOMATIQUE DE CARCASSES D'ANIMAUX DE BOUCHERIE APRES ABATTAGE**
VORRICHTUNG ZUM AUTOMATISCHEN AUSWEIDEN VON SCHLACHTTIERKÖRPERN NACH DEM SCHLACHTEN
DEVICE FOR THE AUTOMATIC EVISCERATION OF SLAUGHTERED ANIMAL CARCASSES

(30) Priorité: 19.12.1988 FR 8817198; 09.01.1989 FR 8900343
(43) Date de publication de la demande: 27.12.1990
(73) Titulaire: Aubert, Georges, F-13360 Roquevaire (FR)
(72) Inventeur: Aubert, Georges, F-13360 Roquevaire (FR)
(74) Mandataire: Roman, Michel
(86) Numéro de dépôt international: FR8900655
(87) Numéro de publication internationale: WO9006685

(56) Documents cités:
- DE-A- 3 123 994
- DE-A- 3 714 677
- FR-A- 2 324 238

## Description

La présente invention a pour objet un dispositif d'éviscération automatique de carcasses d'animaux de boucherie après abattage.

Il est destiné à être misen oeuvre dans une installation industrielle d'abattage fonctionnant à des cadences élevées.

Dans les dispositifs réalisés à ce jour, les éléments sectionneurs perforaient très souvent les intestins par suite de leur pénétration trop profonde lors de l'incision permettant l'extraction des viscères, en particulier en raison de l'imprécision des moyens de positionnement mécaniques. De ce fait, la plupart des appareillages étaient jusqu'à ce jour inutilisables pour permettre des cadences élevées de traîtement dans les installations industrielles d'abattage, de même qu'ils ne pouvaient pas décoller la panne des carcasses de porc.

D'autre part, les Services d'Hygiène Vétérinaires de la Communauté Européenne exigent un procédé d'obturation de l'orifice annal des animaux de boucherie après abbattage.

Le brevet FR-A-2 324 238, du même inventeur, décrit un système d'éviscération automatique fonctionnant à des cadences élevées et pourvu en particulier d'un support avec une fente dans laquelle passe une lame circulaire pour l'incision de la partie ventrale ainsi que d'un outil de sectionnement pour détacher les viscères. Cependant ce système ne permet pas de procéder à l'obturation de l'anus.

Le dispositif suivant la présente invention supprime ces inconvenients et permet, même à des cadences de travail élevées, de procéder automatiquement à l'obturation de l'orifice anal et d'assurer la découpe longitudinale de la surface ventrale des carcasses en même temps que celle de la partie osseuse du sternum, sans qu'il soit possible d'atteindre les viscères.

Il est constitué par la combinaison d'une part, d'un système mécanique automatique de distribution et de mise en place d' obturateurs anaux, d'autre part, d'un bâti mobile supportant une lame circulaire d'incision de la partie ventrale, une scie circulaire à pénétration progressive dans le sternum et un ensemble de dégagement des viscères devant les outils de coupe, constitué de buses projetant de l'eau à une pression réglable.

Sur les dessin annexés, donnés à titre d'exemple non limitatif d'une des formes de réalisation de l'objet de l'invention:
les figures 1 et 2 montrent deux variantes du système de distribution et de mise en place d'obturateurs anaux,
la figure 3 représente à une autre échelle un obturateur anal,
la figure 4 est une vue de l'ensemble du dispositif d' éviscération, vu en élévation et en coupe longitudinale,
la figure 5 représente la table basculante vue de face.

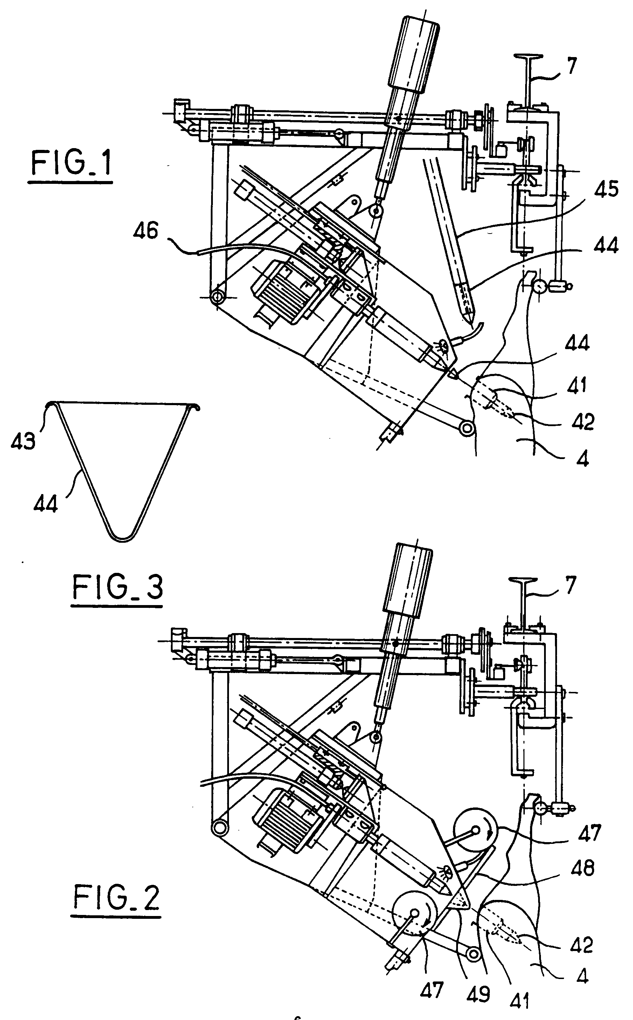

Le dispositif, figure 1 à 5, est implanté à proximité d' un rail 7 sur lequel les carcasses 4 sont suspendues par des crochets 19 entraînés par une chaîne 6, et est constitué d'un système de distribution d'obturateurs anaux, d'un bâti mobile verticalement 22 portant une table basculante 8 et les moyens d'inciser la partie ventrale des carcasses, d'un outil de coupe 2 pour sectionner les viscères et de buses 17, 18, 28 de projection d'eau.

Le système de distribution et de mise en place d'obturateurs anaux a pour but de compléter l'ensemble de détourage de l'anus afin de résoudre le problème des matières contenues dans l'intestin pouvant se répandre sur ou dans la carcasse 4. Cet obturateur 44, est de forme préférentiellement creuse et conique, épousant la forme de l'extrêmité du mandrin de centrage 42 de l'outil de détourage du rectum et est réalisé en matière plastique ou similaire. Il permet une introduction aisée à l'intérieur de l'anus, tout en raclant les adhérences sur les parois internes, assurant ainsi la propreté du mandrin de centrage 42, grâce à une collerette 43 périphérique qui permet de plus le maintien en place de l'obturateur.

Un distributeur automatique 45 à empilage (figure 3) amène les obturateurs 44 un à un sur la trajectoire du mandrin 42. Lorsque le mandrin a rencontré l'obturateur, il est maintenu sur l'extrêmité de celui-ci par une dépression créée grâce à un tube 46. Une fois la pénétration dans l'anus 41 terminée, la dépression cesse et un soufflage décolle l'obturateur 44.

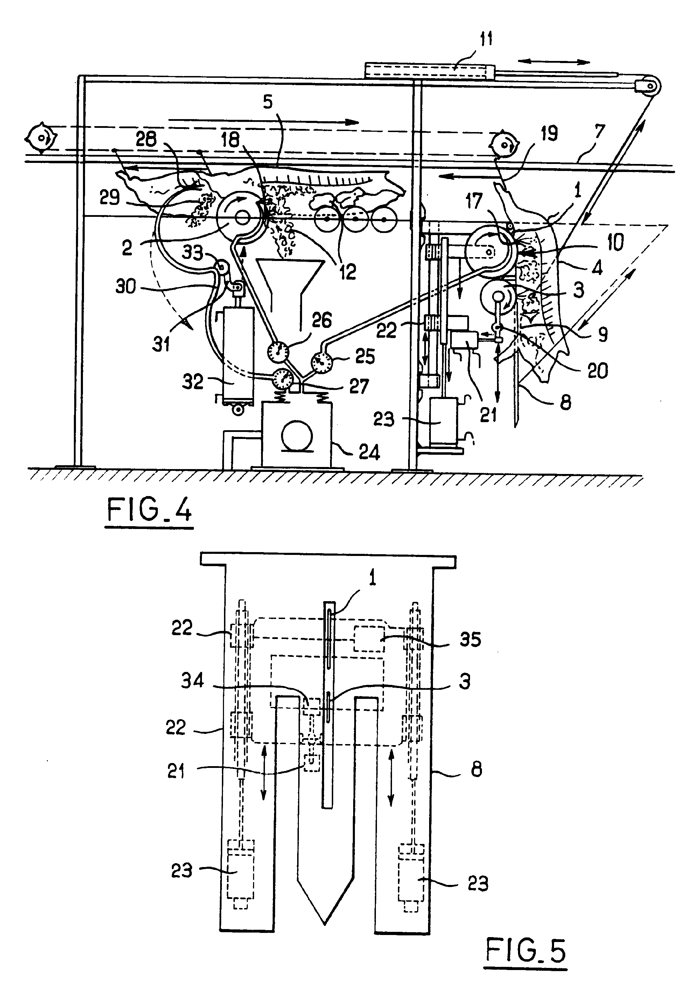

Dans une variante d'exécution, le distributeur automatique est constitué de deux bobines 47 (figure 4) faisant défiler devant le mandrin 42 une bande prédécoupée 48 en plastique ou équivalent, la partie prédécoupée 49 étant libérée et entraînée par la poussée du mandrin 42 au moment de sa pénétration dans l'anus.

La carcasse 4 se présente ensuite la partie ventrale 10 sur la table 8 en position verticale. Par une ouverture centrale de ladite table, la lame circulaiere 1, entraînée par le moteur 35, et la scie circulaire 3 ouvrent en même temps respectivement le ventre 10 et le sternum 9 grâce à un mouvement vers le bas du bâti 22 sous l'effet d'un vérin 23, pendant que de l'eau sous pression projetée par les buses 17 maintiennent les viscères 12 écartées des éléments tranchants. En fin de course, une information est transmise au vérin 11 qui ramène la table 8 en position horizontale. La carcasse est alors entraînée par la chaîne 6, partie ventrale 10 vers le bas, et rencontre d'abord l'outil de sectionnement 2 qui va détacher les viscères 12 dégagées par la projection d'eau sous pression par les buses 18, puis un bras 31 articulé sur un axe 33, actionné par le vérin 32 et portant une buse 28 alimentée par un conduit souple 30, ayant pour fonction, dans le cas des carcasses de porcs, de décoller la panne 29, grâce à une trè forte pression réglée par le manomètre 27.

La scie circulaire 3, entraînée par le moteur 34, est montée sur un bras articulé sur un axe 20 actionné par un vérin 21, pour pénétrer progressivement dans la carcasse 4, le sternum étant moins épais côté ventral qu'entre les épaules.

L'eau sous pression est fournie par une pompe 24. L' ajustage des pressions, différentes selon les parties à traîter, nécessite plusieurs manomètres 25, 26, 27.

Le positionnement des divers éléments constitutifs donnent à ce dispositif un maximum d'effets utiles qui n'avaient pas été obtenus à ce jour par des dispositifs similaires.

## Revendications

1. Dispositif d'éviscération automatique de carcasses d'animaux de boucherie après abattage, du type comportant un support (8) avec une fente dans laquelle passe une lame circulaire (1) pour l'incision de la partie ventrale ainsi qu'un outil de sectionnement (2) pour détacher les viscères, destiné à être mis en oeuvre dans une installation industrielle d'abattage fonctionnant à des cadences élevées, ayant pour objet de procéder automatiquement à l'obturation de l'orifice anal et d'assurer la découpe longitudinale de la surface ventrale des carcasses en même temps que celle de la partie osseuse du sternum, sans qu'il soit possible d'atteindre les viscères,
caractérisé en ce que le dispositif comporte un système mécanique automatique de distribution et de mise en place d'obturateurs anaux (44), un bâti mobile verticalement (22) supportant une table basculante (8) dans une fente de laquelle passent la lame circulaire (1) d'incision de la partie ventrale (10) et une scie circulaire (3) à pénétration progressive dans le sternum, et un ensemble de dégagement des viscères devant les outils de coupe, constitué de buses (17, 18, 28) aptes à projeter de l'eau à une pression réglable, et alimentées par une pompe (24).

2. Dispositif suivant la revendication 1, caractérisé par le fait que le système automatique de distribution et de mise en place d'obturateurs anaux est un distributeur automatique à empilage constitué d'un réservoir de stockage (45) contenant des obturateurs anaux (44) en forme de godets et disposé au-dessus du mandrin de centrage (42) d'un outil de détourage du rectum, le distributeur étant conçu pour amener les obturateurs anaux un à un sur la trajectoire dudit mandrin de centrage.

3. Dispositif suivant la revendication 2, caractérisé en ce que les oburateurs anaux (44) en forme de godets stockés au-dessus du mandrin de centrage (42), sont de forme creuse, conique, avec collerette (43), épousant la forme de l'extrêmité du mandrin de centrage (42), et réalisés en matière plastique alimentaire ou similaire.

4. Dispositif suivant les revendications 2 et 3, se caractérisant par un tube (46) permettant pendant le mouvement de pénétration du mandrin de centrage (42) de créer une dépression pour maintenir l'obturateur anal (44) sur l'extrêmité du mandrin de centrage (42) et pour créer un soufflage pour décoller l'obturateur anal (44) une fois la pénétration terminée

5. Dispositif suivant la revendication 1, se caractérisant par le fait que le système automatique de distribution et de mise en place d'obturateurs anaux est constitué de deux bobines (47) apte à faire défiler devant le mandrin de centrage (42) de l'outil de détourage du rectum une bande prédécoupée (48) en plastique ou équivalent, de telle manière que la partie prédécoupée (49) soit libérée et entraînée par la poussée dudit mandrin de centrage au moment de sa pénétration dans l'anus.

6. Dispositif suivant la revendication 5, caractérisé en ce que la bande prédécoupée (48) est en matière plastique, ou similaire, de qualité alimentaire.

7. Procédé pour éviscération automatique de carcasses d'animaux de boucherie après abattage, se caractérisant par les étapes suivantes: mettre en place d'obturateurs anaux (44), descendre un bâti mobile verticalement (22), portant une lame circulaire (1) et une scie circulaire (3) actionnées par des moteurs (34,35), le long du ventre de la carcasse des animaux pour procéder simultanément à l'ouverture de la partie ventrale (10) et du sternum (9) et, puis, l'opération terminée, remonter le bâti à la position d'attente du prochain animal,
dégager les viscères devant les outils de coupe par un ensemble constitué de buses (17, 18, 28) projetant de l'eau à une pression réglale, et alimentées par une pompe (24).

8. Dispositif suivant la revendication 1, se caractérisant par le fait que la scie circulaire (3) est montée sur un bras articulé sur un axe (20) et actionné par un vérin (21) apte à donner le mouvement progressif de pénétration de coupe dans le sternum (9).

9. Dispositif suivant la revendication 1, caractérisé par une buse (28), alimentée par un conduit souple (30), et montée sur un bras articulé (31) pour atteindre au passage de la carcasse (5) la panne (29) et la décoller par une forte pression d'eau.

10. Dispositif suivant la revendication 9, caractérisé par le fait que la buse (28) est conçue pour être alimentée par une pompe (24) et par la présence d'un vérin (32) apte à actionner le bras articulé (31) pour le mouvement de positionnement de la dite buse.

## Patentansprüche

1. Vorrichtung zum automatischen Ausweiden von Schlachtvieh nach dem Abschlachten, bestehend aus einer mit einem Spalt versehenen Trägerplatte (8), wobei durch den besagten Spalt ein rundes Schneidmesser (1) läuft zum Einschneiden der Bauchpartie, sowie aus einem Trennwerkzeug (2) zum Abtrennen der Eingeweide, bestimmt für den Einsatz in einer mit hoher Ausbringleistung arbeitenden industriellen Schlachtanlage, mit dem Zweck den Verschluß der Analöffnung automatisch durchzuführen und das Tranchieren in Längsrichtung der Bauchfläche und gleichzeitig das der Knochenpartie des Brustbeins der Schlachttiere zu gewährleisten, ohne daß dabei eine Berührung der Eingeweide möglich ist,
dadurch gekennzeichnet, daß diese Vorrichtung ausgestattet ist mit einer selbsttätigen Mechanik zum Zubringen und Einführen von Analverschlußstopfen (44), einem senkrecht beweglichen Rahmen (22), welcher eine kippbare Trägerplatte (8) hält, wobei ein rundes Schneidmesser (1) zum Aufschneiden der Bauchpartie (10) und eine Kreissäge (3) zum progressivem Eindringen in das Brustbein die Spalte dieser Trägerplatte durchragt, sowie einer Einheit zum Abhalten der Eingeweide von den Schneidwerkzeugen, bestehend aus von einer Pumpe (24) gespeisten Düsen (17, 18, 28), welche geeignet sind, Wasser mit regelbarem Druck einzuspritzen.

2. Vorrichtung nach Anspruch 1, dadurch gekennzeichnet, daß das automatische Zubring- und Einführsystem der Analverschlußstopfen ein Stapelautomat ist, bestehend aus einem Reservebehälter (45), der die becherförmigen Analverschlußstopfen (44) enthält und über dem Zertrierbolzen (42) angebracht ist, und einem Beschneidwerkzeug des Rektums, wobei der Automat so ausgelegt ist, daß die Analverschlußstopfen einzeln in die Bewegungsbahn des besagten Zentrierbolzens gebracht werden.

3. Vorrichtung nach Anspruch 2, dadurch gekennzeichnet, daß die über dem Zentrierbolzen (42) gehaltenen becherförmigen Analverschlußstopfen (44) einen Hohlkegel bilden, mit einem Rand (43) versehen sind, ferner der Form des Endes des Zentrierbolzens (42) angepaßt und aus Kunststoff für die Lebensmittelindustrie oder ähnlichem Material hergestellt sind.

4. Vorrichtung nach den Ansprüchen 2 und 3, gekennzeichnet durch ein Rohr (46), welches ermöglicht, während der Einführungsbewegung des Zentrierbolzens (42) einen Unterdruck zu erzeugen, um den Analverschlußstopfen (44) auf dem Ende des Zentrierbolzens (42) festzuhalten, bzw. einen Blasvorgang zu erzeugen, um den Analverschlußstopfen (44) nach der Einführung von dem Zentrierbolzen zu lösen.

5. Vorrichtung nach Anspruch 1, dadurch gekennzeichnet, daß das automatische Zubring- und Einführsystem der Analverschlußstopfen über zwei Spulen (47) verfügt, dazu geeignet, vor dem Zentrierbolzen (42) des Rektum-Beschneidewerkzeugs ein vorgeschnittenes Band (48) aus Kunststoff oder ähnlichem Material abzuwickeln auf eine Weise, daß der vorgeschnittene Teil frei wird und von dem Schub des besagten Zentrierbolzens im Moment seines Eindringens mitgenommen wird.

6. Vorrichtung nach Anspruch 5, dadurch gekennzeichnet, daß das vorgeschnittene Band (48) aus Kunststoff für Lebensmittel oder ähnlichem Material besteht.

7. Verfahren zum automatischen Ausweiden von Schlachtvieh nach dem Abschlachten, gekennzeichnet durch folgende Schritte:
Einführen der Analverschlußstopfen (44);
Vertikales Absenken des beweglichen Rahmens (22), ausgerüstet mit einem runden Schneidmesser (1) und einer Kreissäge (3), welche jeweils von Motoren (34, 35) angetrieben werden, entlang der Bauchseite des Tierrumpfes, um gleichzeitig die Bauchpartie (10) und das Brustbein zu öffnen und, nach Beendigung dieses Vorgangs, Anheben des Rahmens in Bereitschaftsstellung für das folgende Tier;
Abhalten der Eingeweide von den Schneidwerkzeugen durch eine Einheit bestehend aus von einer Pumpe (24) gespeisten Düsen (17, 18, 28), welche Wasser mit regelbarem Druck einzuspritzen.

8. Vorrichtung nach Anspruch 1, dadurch gekennzeichnet, daß die Kreissäge (3) an einem einachsig gelagerten, von einem Stellzylinder (21) bewegten Arm (20) angeordnet ist, geeignet eine progressive Bewegung beim Einschneiden des Brustbeins (9) zu erzeugen.

9. Vorrichtung nach Anspruch 1, gekennzeichnet durch eine Düse (28), welche über eine Schlauchleitung (30) gespeist wird und auf einem beweglichen Arm (31) angeordnet ist, um beim Durchlaufen des Tierrumpfes (5) den Flomen (29) zu erreichen und ihn mit hohem Wasserdruck abzulösen.

10. Vorrichtung nach Anspruch 9, dadurch gekennzeichnet, daß die Düse (28) ausgelegt ist, um von einer Pumpe (24) gespeist zu werden, und mit einem Stellzylinder (32) ausgerüstet ist, geeignet den beweglichen Arm (31) zur Positionierung der besagten Düse zu betätigen.

## Claims

1. Device for automatic evisceration of animal carcasses after slaughter comprising a support (8) with slot for passage of a circular blade (1) for incising the ventral part of animals together with a cutting tool (2) for detaching the viscera, designed to be installed in an industrial slaughterhouse working at high rates, to execute automatic blocking of the anal orifice and ensure a longitudinal incision along the ventral surface of carcasses, including the bony part of the sternum, without touching the viscera,
characterized by the device including an automatic mechanical system for the distribution and insertion of anal blocking devices (44), a vertical mobile frame (22) supporting a tilting table (8) with a slot through which passes a circular blade (1) to incise the ventral part (10) and a circular saw (3) for gradual penetration of the sternum and an assembly for releasing the viscera prior to reaching cutting tools and consisting of adjustable pressure water jets (17, 18, 28) fed by a pump (24).

2. Device as per claim 1 characterized by the fact that the system for automatic distribution and placement of anal plugs is an automatic stacking distributor comprising a storage tank (45) containing anal plugs (44) in the form of cups and arranged above a centring mandrel (42) of a rectum directing tool, the distributor being designed to bring the anal plugs one by one into the line of the said centring mandrel.

3. Device as per claim 2 characterized in that the anal plugs (44) in the form of cups stored above the centring mandrel (42) are hollow, conical in shape with collar (43) which match the shape of the end of the centring mandrel (42), manufactured in food quality plastic or similar.

4. Device as per claims 2 and 3 characterized by a tube (46) to allow creation, during movement of penetration of the centring mandrel (42), of a depression to maintain the anal plug (44) on the end of the centring mandrel (42) and to create an air pressure to remove the anal plug (44) once penetration completed.

5. Device as per claim 1 characterized by an automatic system for distribution and insertion of the anal plugs consisting of two spools (47) to relay across the centring mandrel (42) of the rectum routing tool, a precut strip (48) in plastic or equivalent, so that the precut part (49) is freed and driven by the thrust of the said centring mandrel on anal penetration;

6. Device as per claim 5, characterized in that the precut strip (48) is in food quality plastic or similar material.

7. Process for automatic evisceration of animal carcasses for human consumption after slaughter characterized by the following stages: installation of anal plugs (44), vertical descent of mobile frame (22) comprising a circular blade (1) and a circular saw (3) actuated by motors (34, 35) the length of the animal carcass stomach to simultaneously proceed to opening the ventral part (10) and the sternum (9) and then, this operation terminated, raise the frame to a position in readiness for the next animal, release the viscera in front of the cutting tools by an assembly comprising water jets, (17, 18, 28) operating at adjustable pressures and fed by a pump (24).

8. Device as per claim 1 characterized by the fact that the circular saw (3) is fitted on an articulated arm on a rod (20) and actuated by a hydraulic cylinder (21) for progressive penetration of the cutting action into the sternum (9).

9. Device as per claim 1 characterized by a nozzle (28) fed by a flexible pipe (30) and fitted on an articulated arm (31) to reach the place of passage of the animal carcass (5), the fat (29) and to separate it by a high water pressure.

10. Device as per claim 9 characterized by the jet (28) being designed to be supplied by a pump (24) and by the presence of an actuating cylinder (32) able to operate the articulated arm (31) for positioning the said jet.
